# EUROPEAN PATENT SPECIFICATION

(11) **EP 0 760 201 B1**
(45) Date of publication and mention of the grant of the patent: **02.01.2002**
(21) Application number: 96202331.3
(22) Date of filing: 21.08.1996
(51) Int. Cl.: A01D 80/02

(54) **An agricultural machine for displacing crop lying on the soil**
Landwirtschaftliche Maschine zur Bearbeitung am Boden liegender Erntegüter
Machine agricole pour déplacer des végétaux se trouvant sur le sol

(30) Priority: 25.08.1995 NL 1001056
(43) Date of publication of application: 05.03.1997
(73) Proprietor: MAASLAND N.V., 3155 PD Maasland (NL)
(72) Inventor: Van den Engel, Alfonsus Jacobus, 3137 KC Vlaardingen (NL)
(74) Representative: Corten, Maurice Jean F.M.

(56) References cited:
- EP-A- 0 097 801
- EP-A- 0 278 101
- EP-A- 0 616 761
- DE-A- 2 507 534
- DE-C- 3 938 821
- DE-U- 8 806 149
- FR-A- 2 498 047
- GB-A- 1 217 392
- NL-C- 91 162
- US-A- 2 514 560
- US-A- 3 175 347

## Description

The present invention relates to an agricultural machine for displacing crop lying on the soil in accordance with the preamble of the following main claim.

A suchlike construction is commonly applied and e.g. known from the European patent application EP 0 616 761 A. In the known construction, the clamping piece abuts to the tine portion that joins an abutment face of the rotor. This construction is highly satisfactory, but shows in practice a tendency to breakage, in particular in the regions in the vicinity of the clamping piece and, more in particular, in the region where the clamping of the tine between the abutment face and the clamping piece begins.

The present invention aims at obtaining a machine of the above-mentioned type, in which this drawback does not occur or is at least limited.

According to the invention, this is achieved by means of a construction according to the characterizing part of claim 1.

A first advantage of the construction is that also the legs of the U-shaped tine portion can be bent and can thus participate in absorbing impulses acting on the tine. Due to this, the tine portion available for absorbing impulses to which a tine is subjected, is increased. This has a favourable effect on the life of the tine. Due to the fact that the tine portion abutting to the clamping piece is located at some distance from the abutment face, the bending of the tine in this tine portion remains possible. A second advantage of the present construction is that the tine, also after having been used for a long time, remains fixed in the desired manner. The prior art tine has also the disadvantage that it may come loose after a longer period of time. According to one of the insights on which the invention is based, this is the result of the local pulverizing of the finishing coat, usually consisting of paint, of the tine and/or the abutment face. Due to the pulverizing and the subsequent disappearing of the pulverized material, there is created play between the parts initially abutting rigidly. This loosening is disadvantageous both for the life of the tine and for that of the relevant clamping element and may moreover the processing quality. By means of the invented fastening of the tine including a clamping under spring tension, creation of play as a result of pulverizing is avoided, due to the fact that the room created in the fastening is absorbed by the spring function included therein. The new construction has a favourable influence on the life of the tine as well as on that of the clamping elements. A relatively expensive treatment during which, in the region of the clamped parts, the paint already applied is removed, is rendered superfluous by means of the present construction.

For a better understanding of the present invention and to show how the same may be carried into effect, reference will now be made, by way of example, to the accompanying drawings, in which:
Figure 1 is a partial view from a line transverse to the radial along an arm of a hay-making machine in accordance with the invention;
Figure 2 is a side view according to the arrow II in Figure 1;
Figure 3 is a cross-sectional view according to the line III - III in Figure 2;
Figure 4 partially shows a view according to Figure 2 of a tine fastening of an alternative embodiment;
Figure 5 is a cross-section taken on the line V - V in Figure 4;
Figure 6 partially shows a view according to Figure 2 of a tine fastening of a second alternative embodiment;
Figure 7 is a cross-section according to the line VII - VII in Figure 6, and
Figure 8 shows in detail part of the tine fastening according to Figures 6 and 7.

In the drawings, corresponding parts have been indicated by the same reference numerals. Furthermore, the invention is by no means restricted to the embodiments shown and described here; they only serve to illustrate the inventive idea.

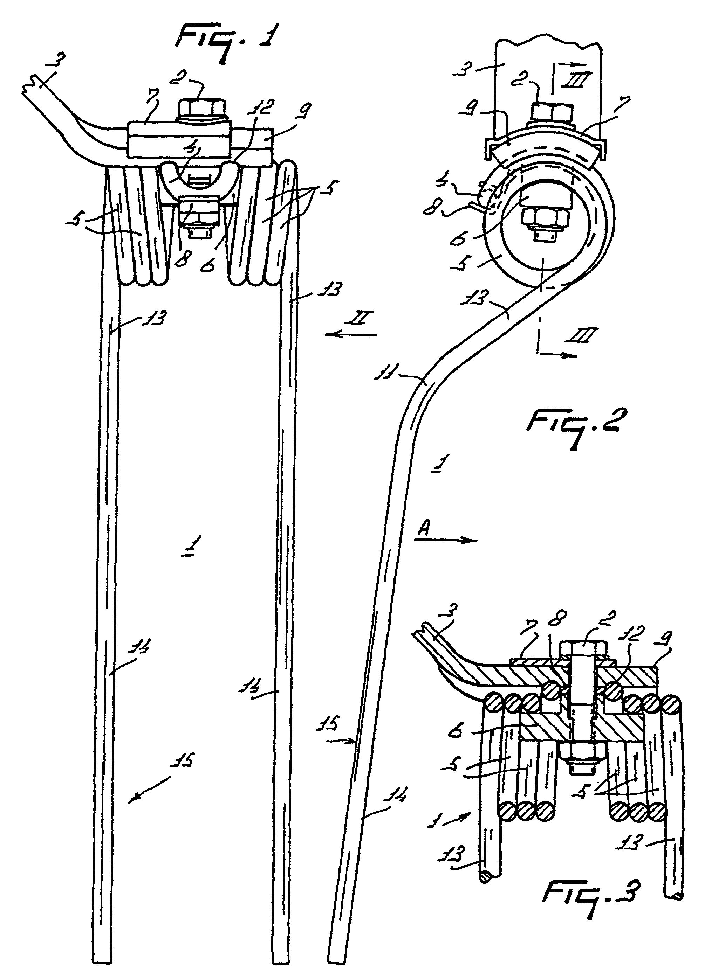

Figures 1 to 3 show a tine 1 which, by means of inter alia a clamping element 2, is fastened to an arm 3 of a non-shown rotor of a hay-making machine, neither shown but known per se, for tedding and spreading of hay. However, the tine fastening constructions to be discussed in what follows are also applicable to the rotors of e.g. windrowers, having an axis of rotation orientated either vertically or horizontally, to the picking-up members of agricultural machines such as loader waggons and bale presses, or to any other type of agricultural machine for processing hay or straw.

The tine 1 comprises two ends of active parts 15, which, in a mounted position, extend downwardly from near a fastening part of the tine. The tine 1 is made of one piece of a threadlike and stiff but resilient material. The fastening part of the tine 1 includes at least one part 4, having, in plan view, a U-shaped bending extending between two groups of a number of substantially uniform windings 5. In a preferred embodiment, the number per group amounts to four, counted along the side of the tine 1 being, in a mounted position, the upper side thereof. The U-shaped tine portion 4 follows with a somewhat larger diameter the outlines of the windings 5 and merges into the two inner windings, which, just beyond their lower circumferential part, in the direction of the U-shaped tine portion 4, extend with a gradually increasing diameter relative to the other windings 5.

The fastening of the tine 1 comprises a clamping piece 6, extending substantially in the cylinder-shaped cavity determined by the windings 5, and via which the tine 1 is kept, by means of the clamping element 2, against a concave abutment face of a fastening part 9 of the rotor of the agricultural machine, in particular of an arm 3 thereof. The clamping piece 6 is substantially T-shaped. The non-continuing part of the T-piece, briefly the dead end, extends between the legs of the U-shaped tine portion 4 in the direction of the abutment face of the fastening part 9 and is supported thereagainst. In this manner the dead part of the clamping piece 6 extends also radially relative to the convex fastening part 9. Between the abutment face of the fastening part 9 and the dead part of the clamping piece 6, there is passed a part of a supporting element 8. Hereby the supporting element 8 is in such a communication with the clamping element 2 that a change in the position of the latter also implies a change in the position of the supporting element 8. The other end of the supporting element 8, constituted in the present embodiment by a shaped plate part, is located near the basis, i.e. the body, of the U-shaped tine portion 4. This end comprises at least two bent parts which, seen in the view according to Figure 2, are orientated in a direction transverse to the tangent along the end of the U-shaped tine portion 4, while at least one part extends along the upper side of the U-shaped tine portion 4 and at least one part extends along the lower side thereof. In this manner, the end of the U-shaped tine portion 4 is located so as to be fitted between the two bent parts of the supporting element 8. In the present embodiment, the upper bent part of the supporting element 8 is punched out of the plate material of the supporting element.

The fastening of a tine 1 furthermore comprises a positioning element 7, in the present embodiment constituted by a plate part which, relative to the fastening part 9, is secured against moving in the direction of movement A of the tine 1. In the present embodiment, this is realized by bending the plate part along the edges of the fastening part 9.

In the specific embodiment according to Figures 1 to 3, the clamping element 2 is constituted by a nutted bolt. This bolt is passed through a fitting aperture in the positioning element 7, through a slotted hole extending in the direction of rotation A in the fastening part 9, through a fitting aperture in the supporting element 8 and through a fitting borehole through the clamping piece 6. The positioning element 7 is provided with two fitting boreholes which mutually take different positions relative to a centre line coaxial to the cylinder determined by the windings 5. By turning of the positioning element 7 about a vertical shaft and/or moving same along the fastening part 9, there are created four different positions to be taken by the clamping element 2 and hence the tine 1 relative to the fastening part 9 and hence relative to the soil surface.

The fastening part 9 of a rotor of the hay-making machine according to the invention comprises in the abutment face two fitting notches, in which the legs of the U-shaped tine portion 4 are included. The depth of the local notch is less than half the tine diameter, while locally the radial distance with which the legs of the U-shaped tine portion 4 extend outside the windings 5, amounts at least to half a tine diameter. The clamping piece 6 extends in the axial direction of the imaginary cylinder determined by the windings beyond the legs of the U-shaped tine portion 4 and is clamped against one or more of the windings 5, preferably at least against an inner winding and, in the embodiment shown including three windings 5, preferably exclusively against the inner one, i.e. the winding immediately located beside a leg of the U-shaped tine portion 4. The dead part of the T-shaped clamping piece 6 has such a length that the juxtaposed inner windings, from their initial position, against the spring force present in the tine 1 also due to the windings, can be clamped in the direction of the abutment face, but remain free from same. The dead part of the clamping piece 6 hereby serves as a spacer element. The thickness of the intermediate supporting element 8 is taken into account in the above-described construction.

The end of the U-shaped tine portion 4 is located, relative to the direction of movement A of the tine 1, near the rear side of the windings 5. The ends of the tine 1 are located, relative to the direction of movement A of the tine 1, at the rear side of an imaginary plane extending vertically and radially relative to the relevant rotor and centrally through the windings 5. Hereby the outer windings 5, from halfway their foremost and lower quarter part, merge into a tine portion 13, extending substantially straight and, at an angle of approximately 45°, rearwardly and downwardly. The tine portion 13 extends until a bending 11. From here, a lower tine portion 14 also extends substantially straight and, at an angle of approximately 30° relative to an imaginary plane extending radially and vertically, downwardly and rearwardly.

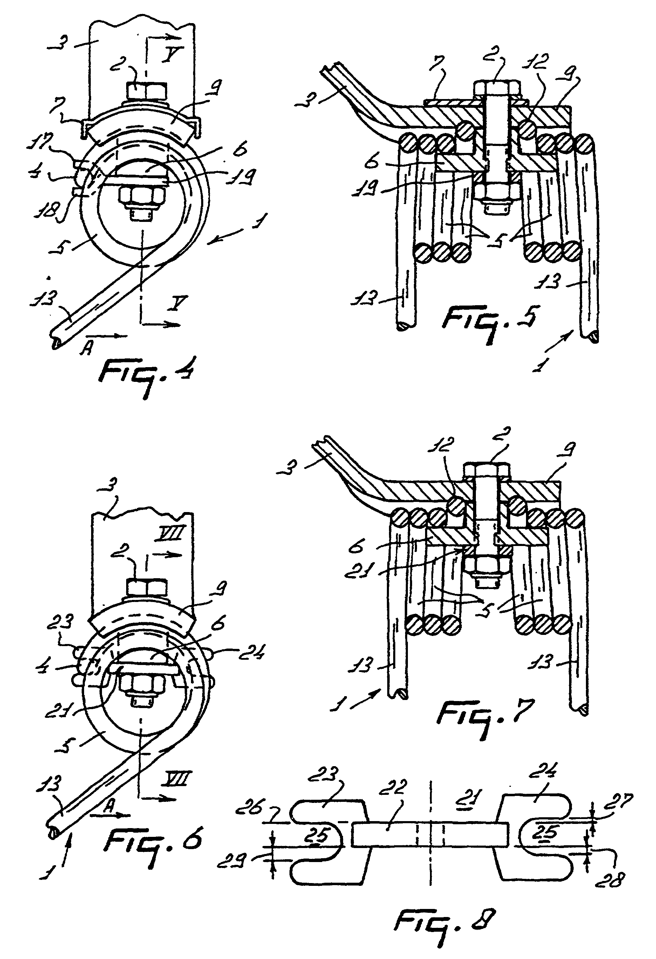

Figures 4 and 5 show an alternative for the construction in accordance with the invention, whereby the movement of the body of the U-shaped tine portion 4 in its two possible directions of movement, allowed by the notches 12 in the fastening part 9, is counteracted. The aforementioned body is clamped between two stops 17 and 18, moved so as to fit therearound, constituting part of a substantially plate-shaped supporting element 19. In the present embodiment, the supporting element 19 is fixed to the lower side face of the clamping piece 6 by means of the clamping element 2. Seen in side view, the stops 17 and 18 of the supporting element 19 are bent symmetrically relative to the initial plate part and form a U-shaped slot, in which the body is capable of being moved to a very small extent from the other windings respectively towards same. Seen in plan view, the upper stop 17 is located between two lower stops 18. From the combination with the view according to Figure 5 it appears that this supporting element 19 is made of a substantially rectangular plate part. The elements 17 and 18 are formed out of an end part of such a rectangular plate, said end part including a latitudinal side.

Figures 6 and 7 show a construction including a supporting and positioning element 21, whereby the functions of the above-described positioning element 7 and those of the supporting elements 8 and 19 are combined in one single construction element 21. As is also shown in Figure 8, the supporting and positioning element 21 comprises a flat body portion 22, via which said element is clamped against the lower side of the clamping piece 6 by means of the clamping element 2. The element 21, which should preferably be forged, comprises, near the ends of the plate-shaped part 22, also plate-shaped parts 23, 24 respectively, extending at right angles to the latter part. In both parts 23 and 24 there is provided a U-shaped recess 25, which, in order to obtain a mounted position, is capable of being moved so as to fit around the body of a U-shaped tine portion. The U-shaped recesses are each arranged at different heights relative to an abutting face of the plate-shaped body portion 22. For example, one of the straight edges of the recess of the end part 23 coincides with the produced part of an abutment face of the body portion 22.

The straight edges of the U-shaped recesses 25 constitute a stop for the body of the U-shaped tine portion 4. The recesses 25 can be moved so as to fit around a tine, so that both recesses have the same size. The straight edges of the recesses 25 extend in the form of a line or a plane parallel to the two abutment faces of the body 22. Measured in a direction perpendicular to the abutment faces of the element 21, each of the four straight edges has a different distance relative to the nearest abutment face. Because of this, after fixing of the supporting and positioning element 21 to a clamping piece 6, four different positions of a tine 1 can be obtained. A first position, in which a tine 1 in a mounted condition, near its front side, forms the least acute angle relative to the soil surface, is obtained by mounting the element 21 in such a way that the straight edge having the distance 26 relative to the nearby, i.e. abutting, abutment face, is located at the upper side of the body of a U-shaped tine portion. A second position of the tine, in which the latter forms a somewhat more acute angle relative to the soil surface, is obtained by making use of the edge situated at the other end of the element 21, but near the same abutment side of the body 22, having the vertical distance 27 relative to said abutment face. By rotating the element 21 about its longitudinal axis, the other straight edge of the plate-shaped part 24 can be utilized, which edge has a third distance 28 relative to the then applied abutment face of the body 22. The fourth position of the tine, in . which the latter forms the most acute angle relative to the soil surface, is obtained by bringing the element 21, from the latter position, into a position in which it is turned over 180° about a shaft orientated transversely to the longitudinal axis of the element 21. Hereby the edge included in the plate part 23 having the largest distance 29 to the then active abutment face of the body 22 is situated at the upper side of the body of a U-shaped tine portion of a mounted tine. Both the supporting and positioning element 21 and the supporting element 19 are provided with a borehole orientated square to the body portion 22, via which the element 21, by means of a clamping element 2 designed as a nutted bolt, may be incorporated in the tine fastening. Upon mounting a tine 1, out of the four possible positions of the supporting and positioning element 21 the position has to be chosen which results in the tine angle desired for the relevant machine, i.e. the angle formed by the front edge of the tine 1 with e.g. the soil surface. In case of a hay-making machine for tedding and spreading of crop, the latter tine angle will preferably be between 82 and 87°.

The function of the above-described construction will be explained in what follows.

During operation of the hay-making machine, the axes of rotation of the rotors are situated under a small angle with a vertical, in such a way that a rotor is inclined somewhat forwardly relative to the direction of movement A. Due to this, a tine 1 is active, under normal conditions, substantially in the front part of the circumference of a rotor. Hereby crop lying on the soil, such as hay and straw, is displaced. Especially when the crop has to be tedded, which is in particular the purpose of the present construction, this will be accompanied by a strong impulse. This impulse will be stronger when the crop is lying in swaths. The impulse is absorbed in the construction in a damped manner by means of the elasticity of the spring windings 5. In the construction, the latter are charged so as to have the tendency to diminish. An active tine portion acts thereby as a lever on the relevant outer winding. Because of the shape of the winding 5 this bending moment is passed continuously to the wound tine portions 5 situated more inwardly. Finally, via the U-shaped tine portion 4, part of the impulse is passed to the arm 3 in a damped manner. By means of the described indirect clamping, the U-shaped tine portion 4 is movable under spring tension, relative to the abutment face 9, in the direction of the legs of said portion, i.e. substantially square to the longitudinal direction of the fastening part 9. Hereby, in the present embodiment, this tine portion is guided through the notches. Besides the legs of the U-shaped tine portion 4, also the body thereof is included in the fastening so as to be movable to a certain extent, for the purpose of absorbing an impulse acting on the tine. The body moves along the edges of recesses of the supporting elements 8, 19, 21.

The invention is not restricted to the aforementioned description, but also relates to all the details of the drawings. The invention furthermore relates to all sorts of alternatives in the construction, of course, falling within the scope of the following claims.

## Claims

1. An agricultural machine for displacing crop lying on the soil by means of at least one tine (1) attached to a rotatable member, which tine (1) is made of elongated, resilient material, such as spring steel, and comprises an active part (15) for displacing crop, which, near its upper side, merges into a tine portion including at least one winding (5) and having a further tine portion (4), extending outside the circumference of the winding (5) and abutting to an abutment face of the rotatable member, which tine (1) is connected with the rotatable member by means of a clamping piece (6), **characterized in that** the clamping piece (6) engages at least one of the windings (5) located next to the further tine portion (4), so that said at least one of the windings (5) is clamped in the direction of the abutment face, but remains free from same, such that said further tine portion can be bent.

2. An agricultural machine as claimed in claim 1, **characterized in that** a tine 1 is provided with at least four windings (5).

3. An agricultural machine as claimed in claim 1 or 2, **characterized in that** the abutment face (9) constitutes part of an arm (3) extending radially in the rotatable member.

4. An agricultural machine as claimed in claim 1, 2 or 3, **characterized in that** the clamping piece (6) extends at least partially substantially parallel to the imaginary centre line through the windings (5).

5. An agricultural machine as claimed in any one of the preceding claims, **characterized in that** the clamping piece (6) is T-shaped and with a leg is supported against the abutment face (9).

6. An agricultural machine as claimed in claim 5, **characterized in that** the leg is provided in its longitudinal direction with a borehole, through which there is passed a clamping element (2) for the fastening of the tine.

7. An agricultural machine as claimed in any one of the preceding claims, **characterized in that** the rotatable member in the region of the abutment face (9) is provided with a borehole, through which extends a clamping element (2).

8. An agricultural machine as claimed in any one of the preceding claims, **characterized in that** the abutment face is concave.

9. An agricultural machine as claimed in any one of the preceding claims, **characterized in that** the clamping piece (6), at one side of the further tine portion (4), engages exclusively one winding (5).

10. An agricultural machine as claimed in any one of the preceding claims, **characterized in that** the clamping piece (6), at one side of the further tine portion (4), engages exclusively the immediately juxtaposed winding (5).

11. An agricultural machine as claimed in any one of the preceding claims, **characterized in that** a tine (1) comprises two active end parts (15) and the further tine portion (4) is U-shaped.

12. An agricultural machine as claimed in any one of the preceding claims, **characterized in that** the machine comprises a supporting element (8, 19, 21) appropriate to function both as a positioning and a fastening element.

13. An agricultural machine as claimed in any one of the preceding claims, **characterized in that** a positioning element (21) engages the further tine portion (4), which positioning element (21) is provided with several stops for achieving several different corrections (26 - 29) of the position in which the tine (1), without correcting measures, would be mounted relative to the rotatable member.

## Patentansprüche

1. Landwirtschaftliche Maschine zum Verlagern von am Boden liegendem Erntegut mit Hilfe mindestens eines Zinkens (1), der an einem drehbaren Glied angebracht ist, wobei der Zinken (1) aus einem langgestreckten elastischen Material, wie z. B. Federstahl, hergestellt ist und einen Arbeitsteil (15) zum Verlagern von Erntegut umfaßt, der nahe seinem oberen Ende in einen Zinkenteil übergeht, der mindestens eine Windung (5) und einen weiteren Zinkenteil (4) aufweist, der sich außerhalb des Umfanges der Windung (5) erstreckt und an einer Anlagefläche des drehbaren Gliedes anliegt, wobei der Zinken (1) mit dem drehbaren Glied mittels eines Klemmstückes (6) verbunden ist,
**dadurch gekennzeichnet, daß** das Klemmstück (6) in mindestens eine der nahe dem weiteren Zinkenteil (4) angeordneten Windungen(5) eingreift, so daß zumindest eine der Windungen (5) in Richtung auf die Anlagefläche festgeklemmt wird, jedoch von dieser frei bleibt, so daß der weitere Zinkenteil gebogen werden kann.

2. Landwirtschaftliche Maschine nach Anspruch 1,
**dadurch gekennzeichnet, daß** ein Zinken (1) mit mindestens vier Windungen (5) versehen ist.

3. Landwirtschaftliche Maschine nach Anspruch 1 oder 2,
**dadurch gekennzeichnet, daß** die Anlagefläche (9) Teil eines Armes (3) bildet, der sich in dem drehbaren Glied in radialer Richtung erstreckt.

4. Landwirtschaftliche Maschine nach Anspruch 1, 2 oder 3,
**dadurch gekennzeichnet, daß** sich das Klemmstück (6) zumindest teilweise im wesentlichen parallel zur gedachten Mittellinie durch die Windungen (5) erstreckt.

5. Landwirtschaftliche Maschine nach einem der vorhergehenden Ansprüche,
**dadurch gekennzeichnet, daß** das Klemmstück (6) T-förmig ausgebildet und mit einem Schenkel an der Anlagefläche (9) abgestützt ist.

6. Landwirtschaftliche Maschine nach Anspruch 5,
**dadurch gekennzeichnet, daß** der Schenkel in seiner Längsrichtung mit einer Bohrung versehen ist, in die ein Klemmelement (2) zur Befestigung des Zinkens eingesetzt ist.

7. Landwirtschaftliche Maschine nach einem der vorhergehenden Ansprüche,
**dadurch gekennzeichnet, daß** das drehbare Glied im Bereich der Anlagefläche (9) mit einer Bohrung versehen ist, durch die ein Klemmelement (2) hindurchgeführt ist.

8. Landwirtschaftliche Maschine nach einem der vorhergehenden Ansprüche,
**dadurch gekennzeichnet, daß** die Anlagefläche konkav ausgebildet ist.

9. Landwirtschaftliche Maschine nach einem der vorhergehenden Ansprüche,
**dadurch gekennzeichnet, daß** das Klemmstück (6) auf einer Seite des weiteren Zinkenteiles (4) nur in eine Windung (5) eingreift.

10. Landwirtschaftliche Maschine nach einem der vorhergehenden Ansprüche,
**dadurch gekennzeichnet, daß** das Klemmstück (6) auf einer Seite des weiteren Zinkenteiles (4) nur in die unmittelbar daneben angeordnete Windung (5) eingreift.

11. Landwirtschaftliche Maschine nach einem der vorhergehenden Ansprüche,
**dadurch gekennzeichnet, daß** ein Zinken (1) zwei Arbeitsendteile (15) umfaßt und der weitere Zinkenteil (4) U-förmig ausgebildet ist.

12. Landwirtschaftliche Maschine nach einem der vorhergehenden Ansprüche,
**dadurch gekennzeichnet, daß** die Maschine ein Stützelement (8, 19, 21) umfaßt, das dazu ausgebildet ist, sowohl als Positionier- als auch als Befestigungselement zu dienen.

13. Landwirtschaftliche Maschine nach einem der vorhergehenden Ansprüche,
**dadurch gekennzeichnet, daß** ein Positionierelement (21) in den weiteren Zinkenteil (4) eingreift, wobei das Positionierelement (21) mit mehreren Anschlägen versehen ist, um mehrere unterschiedliche Korrekturen (26 bis 29) der Position zu erzielen, in der der Zinken (1) ohne Korrekturmaßnahmen relativ zu dem drehbaren Glied montiert werden würde.

## Revendications

1. Machine agricole pour déplacer des végétaux reposant sur le sol au moyen d'au moins une dent (1) fixée à un élément capable de tourner, laquelle dent (1) est réalisée en un matériau élastique allongé, tel qu'un acier à ressort, et comprend une partie active (15) pour déplacer les végétaux, qui, à proximité de son côté supérieur, se fond dans une partie de dent comprenant au moins un enroulement (5) et comportant une autre partie de dent (4), s'étendant à l'extérieur de la circonférence de l'enroulement (5) et en butée avec une face de butée de l'élément capable de tourner, laquelle dent (1) est reliée à l'élément capable de tourner au moyen d'une pièce de serrage (6), **caractérisée en ce que** la pièce de serrage (6) est en prise avec au moins un des enroulements (5) situé à proximité de l'autre partie de dent (4), de sorte que ledit au moins un des enroulements (5) soit serré dans la direction de la face de butée, mais reste libre par rapport à celle-ci, de telle sorte que ladite autre partie de dent puisse être pliée.

2. Machine agricole selon la revendication 1, **caractérisée en ce qu'**une dent 1 est pourvue d'au moins quatre enroulements (5).

3. Machine agricole selon la revendication 1 ou 2, **caractérisée en ce que** la face de butée (9) fait partie d'un bras (3) s'étendant radialement dans l'élément capable de tourner.

4. Machine agricole selon la revendication 1, 2 ou 3, **caractérisée en ce que** la pièce de serrage (6) s'étend au moins partiellement sensiblement parallèlement à la ligne médiane imaginaire à travers les enroulements (5).

5. Machine agricole selon l'une quelconque des revendications précédentes, **caractérisée en ce que** la pièce de serrage (6) a une forme en T et, avec une patte, est supportée contre la face de butée (9).

6. Machine agricole selon la revendication 5, **caractérisée en ce que** la patte est pourvue dans sa direction longitudinale d'un trou, à travers lequel un élément de serrage (2) est passé pour la fixation de la dent.

7. Machine agricole selon l'une quelconque des revendications précédentes, **caractérisée en ce que** l'élément capable de tourner dans la région de la face de butée (9) est pourvu d'un trou, à travers lequel s'étend un élément de serrage (2).

8. Machine agricole selon l'une quelconque des revendications précédentes, **caractérisée en ce que** la face de butée est concave.

9. Machine agricole selon l'une quelconque des revendications précédentes, **caractérisée en ce que** la pièce de serrage (6), sur un côté de l'autre partie de dent (4), est en prise exclusivement avec un enroulement (5).

10. Machine agricole selon l'une quelconque des revendications précédentes, **caractérisée en ce que** la pièce de serrage (6), sur un côté de l'autre partie de dent (4), est en prise exclusivement avec l'enroulement immédiatement juxtaposé (5).

11. Machine agricole selon l'une quelconque des revendications précédentes, **caractérisée en ce qu'**une dent (1) comprend deux parties d'extrémité actives (15) et l'autre partie de dent (4) est en forme de U.

12. Machine agricole selon l'une quelconque des revendications précédentes, **caractérisée en ce que** la machine comprend un élément de support (8, 19, 21) approprié pour fonctionner à la fois en tant qu'élément de positionnement et de fixation.

13. Machine agricole selon l'une quelconque des revendications précédentes, **caractérisée en ce qu'**un élément de positionnement (21) est en prise avec l'autre partie de dent (4), lequel élément de positionnement (21) est pourvu de plusieurs butées pour obtenir plusieurs corrections différentes (26 à 29) de la position dans laquelle la dent (1), sans mesures de correction, serait montée par rapport à l'élément capable de tourner.
